# DEMANDE DE BREVET EUROPEEN

(11) **EP 1 499 139 A1**
(43) Date de publication de la demande: **19.01.2005**
(21) Numéro de dépôt: 04291839.1
(22) Date de dépôt: 19.07.2004
(51) Int. Cl.: H04Q 7/22

(54) **Système et procédé d'accès à une communication vocale ou une communication de données type WAP ou MMS à partir d'une connexion USSD**

(30) Priorité: 17.07.2003 FR 0308719
(71) Demandeur: FRANCE TELECOM, 75015 Paris (FR)
(72) Inventeur: Vittu, Juliette, 94250 Gentilly (FR); Mienville, Thibaud, 75015 Paris (FR)
(74) Mandataire: Callon de Lamarck, Jean-Robert

(57) **Abrégé**

L'invention concerne un procédé de mise en oeuvre d'une communication ayant un type appartenant au groupe constitué des communications de type vocale, WAP ou MMS sur un téléphone mobile (10), dans lequel procédé une étape préliminaire consiste à offrir à l'utilisateur (10) la possibilité d'activer ou non une telle communication, caractérisé en ce que ce choix d'activer ou non une telle communication est offert à l'utilisateur par une connexion USSD (10, 20).

## Description

L'invention concerne les télécommunications et plus spécifiquement les communications téléphoniques mobiles.

Il existe aujourd'hui un grand nombre de technologies accessibles aux terminaux mobiles. Ces technologies se différencient d'une part par le type de contenu proposé à l'utilisateur (contenu vocal ou data allant du simple texte à la vidéo), d'autre part par le moyen d'accès à ce contenu (initié par l'utilisateur ou par un tiers), et finalement par le volume et le type de ressource consommé.

L'USSD (Unstructured Supplementary Service Data) est un moyen de transmission d'informations sur un réseau GSM, GPRS ou UMTS. L'USSD a été défini (standards ETSI, 3GPP [1] [2] [3]) à l'origine pour la commande de services supplémentaires spécifiques aux opérateurs. Il offre aujourd'hui en pratique des possibilités de services beaucoup plus vastes (accès à des bouquets de services, consultation des comptes prépayés ou post payés....).

L'USSD offre une connexion orientée session, half-duplex et bidirectionnelle entre un terminal mobile et un serveur applicatif USSD. Les sessions peuvent être ouvertes à l'initiative du mobile par simple appel d'un code de service (i.e. numéro court avec des * et #).

Cette technologie permet l'échange d'informations sous format texte uniquement. L'USSD utilise le canal de signalisation : il est peu gourmand en ressources réseaux et donc peu coûteux. Il est aujourd'hui supporté par une très large majorité de téléphones mobiles.

On connaît également la technologie WAP (Wireless Application Protocol) qui offre à l'utilisateur un accès à l'Internet mobile. Elle permet à l'utilisateur d'accéder à du contenu multimédia et est aujourd'hui supportée par une très large majorité de téléphones mobiles.

Contrairement à l'USSD, le WAP nécessite l'établissement d'un canal de communication de données. Il est plus coûteux en terme de ressources réseaux comparé à l'USSD.

Outre la voix, les autres technologies accessibles aux téléphones mobiles sont notamment la technologie SMS et la technologie MMS.

Les serveurs vocaux permettent à l'utilisateur d'accéder à de l'information vocale. L'utilisateur établit une communication voix avec le serveur vocal souhaité.

La technologie SMS (Short Message Service) offre un service de messagerie qui permet à un utilisateur d'envoyer/recevoir une information sous format texte. Ce service utilise le canal de signalisation tout comme l'USSD.

La technologie MMS (Multimédia Messaging Service) offre un service de messagerie qui permet à un utilisateur d'envoyer/recevoir un contenu multimédia. Un message multimédia peut contenir du texte, des images, du son et de la vidéo. Contrairement au SMS, le MMS nécessite que l'utilisateur se connecte au serveur de messagerie (MMSC) pour retirer le message.

L'USSD, le WAP, le SMS, le MMS et la voix sont des technologies de natures différentes, indépendantes les unes des autres et destinées à des services spécifiques.

Chacune de ces technologies présente ses limitations, soit en termes de volume de données véhiculées, soit en termes de rapidité d'accès et d'encombrement réseau.

L'invention vise en particulier à apporter une meilleure réponse aux inconvénients de ces différentes technologies considérées indépendamment. L'invention vise ainsi un accès simple et efficace à un contenu adapté.

Ce but est atteint selon l'invention grâce à un procédé de mise en oeuvre d'une communication ayant un type appartenant au groupe constitué des communications de type vocale, WAP ou MMS sur un téléphone mobile, dans lequel procédé une étape préliminaire consiste à offrir à l'utilisateur la possibilité d'activer ou non une telle communication, caractérisé en ce que ce choix d'activer ou non une telle communication est offert à l'utilisateur par une connexion USSD.

On propose également selon l'invention un réseau de téléphonie mobile comprenant un serveur applicatif et une plateforme de communication mettant en oeuvre une communication d'un type appartenant au groupe composé des communications de type vocale, WAP ou MMS, le serveur applicatif comprenant des moyens pour mettre en oeuvre une connexion USSD avec un téléphone mobile, caractérisé en ce que le serveur applicatif est prévu pour prendre en compte une instruction du téléphone mobile reçue par cette connexion USSD, et, en réponse à cette instruction, initier une communication entre la plateforme de communication et le téléphone mobile.

On propose également selon l'invention un serveur applicatif de réseau de téléphonie mobile, comprenant des moyens pour mettre en oeuvre une connexion USSD avec un téléphone mobile, le serveur étant caractérisé en ce qu'il inclut des moyens pour prendre en compte une instruction de téléphone mobile reçue par cette connexion USSD, et, en réponse à cette instruction, initier une communication du téléphone mobile, cette communication appartenant au groupe des communications de type WAP, vocale ou MMS.

D'autres caractéristiques, buts et avantages de l'invention apparaîtront à la lecture de la description détaillée qui va suivre, faite en référence aux figures annexées sur lesquelles :
- la figure 1 représente une architecture préférée pour la mise en oeuvre de l'invention ;
- la figure 2 illustre un menu à rubrique mis à disposition d'un utilisateur dans le cadre de l'invention;
- la figure 3 illustre un premier choix fait par l'utilisateur;
- la figure 4 illustre une réponse à ce choix initiée par un serveur applicatif;
- la figure 5 illustre un second choix fait par l'utilisateur;
- la figure 6 illustre une réponse à ce choix initiée par un serveur applicatif.

Dans l'exemple de réalisation qui va être décrit maintenant, on vise à offrir des services s'appuyant à la fois sur plusieurs technologies USSD, WAP, SMS, MMS ou vocal.

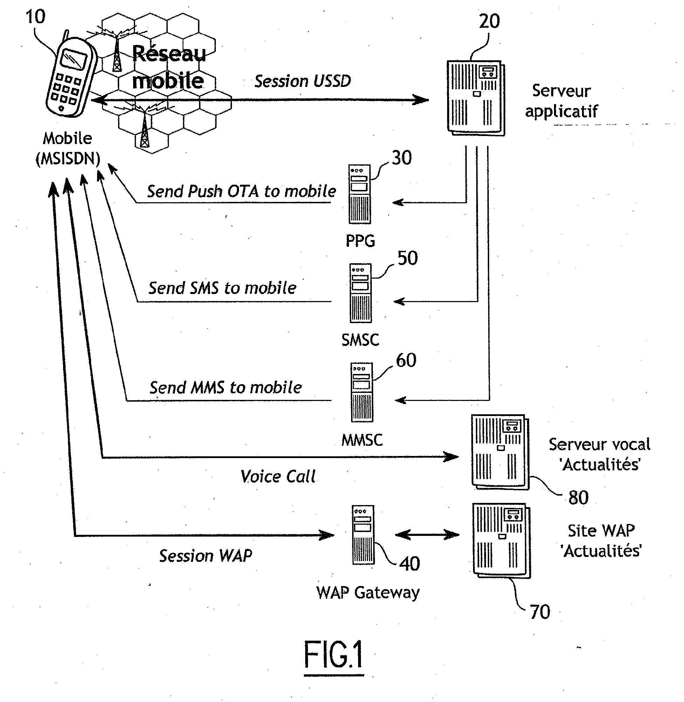

Une architecture de mise en oeuvre du service est décrite ci-dessous, en référence à la figure 1.

Cette architecture met en oeuvre:
- un serveur applicatif 20 en charge de la logique de service. Ce serveur applicatif est au centre du présent mode de réalisation de l'invention ;
- une Push Proxy Gateway 30 prenant en charge un envoi de message de Push WAP ;
- une WAP gateway 40 (passerelle entre le réseau radio et le réseau fixe);
- un SMSC 50 prenant en charge un envoi de message texte (SMS);
- un MMSC 60 prenant en charge un envoi de message Multimédia (MMS).

Le serveur applicatif en charge de la logique de service a le rôle de faire migrer un utilisateur mobile depuis une connexion USSD (indépendamment Phase 1 ou Phase 2) vers une communication vocale ou une communication de données de type WAP, SMS ou MMS.

On décrira donc un exemple de réalisation et d'intégration de l'invention dans un réseau mobile pour les quatre types de technologies SMS, MMS, WAP et vocal.

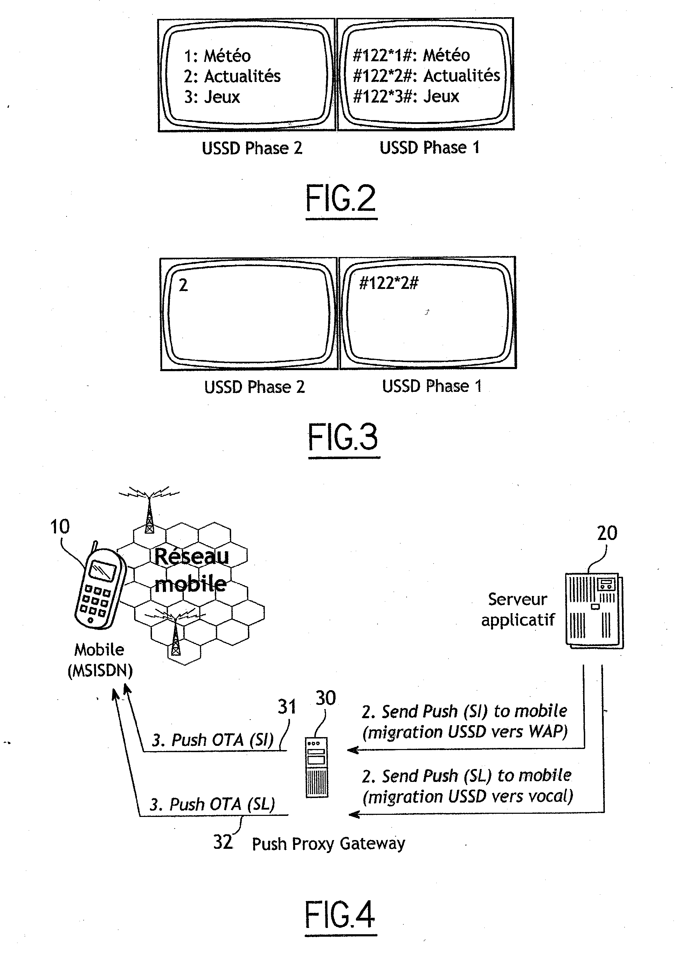

En référence à la figure 2, l'utilisateur 10 initie d'abord à partir de son terminal mobile, une session USSD et consulte un menu associé (en USSD Phase 1 ou Phase 2 selon la compatibilité réseau et/ou terminal).

En USSD Phase 1, une connexion ne peut être ouverte que sur l'initiative du mobile, et n'est composée que d'une demande et une réponse. Avec l'USSD Phase 2, normalisé plus récemment, une connexion peut être ouverte à l'initiative du mobile ou d'un serveur applicatif. Une connexion (ou session) USSD Phase 2 se compose d'un nombre en théorie illimité de demandes/réponses (navigation par menus).

Cette invention s'applique indépendamment à l'USSD Phase 1 et USSD Phase 2.

Le menu USSD s'affiche (figure 2) sous la forme, à titre d'exemple, de trois possibilités de choix offerts à l'utilisateur : météo, actualité, jeux.

Considérons d'abord le cas où l'utilisateur choisit la rubrique « Actualités » (figure 3). Dans cet exemple de service, cette rubrique se réfère à un site WAP ou à un serveur vocal.

Le mode de réalisation s'appuie en particulier sur le Push WAP (introduit dès la version WAP 1.2) qui permet d'élargir les usages du WAP en « pushant » (poussant) aux utilisateurs mobiles des contenus interactifs SI (Service Indication) ou SL (Service Loading).

A la réception d'un SI (petit texte et URL), l'utilisateur est invité à se connecter sur le site WAP pointé par l'URL. A la réception d'un SL (URL uniquement), selon le degré de priorité du message, le terminal se connecte automatiquement vers le site WAP pointé par l'URL.

Le Push WAP est défini dans les standards (WAP Forum, OMA) : [4] [5] [6].

Pour un accès vers le WAP, on considère donc ici que l'utilisateur a un terminal compatible USSD et WAP 1.2 minimum.

L'accès par l'utilisateur à la rubrique « Actualités » se fera ici en WAP ou en vocal.

La réponse de l'utilisateur est envoyée par le mobile (Phase 2 ou Phase 1) et le serveur applicatif 20, en charge de la logique de service, clôt la connexion USSD et commande l'affichage d'un message « votre demande est prise en compte » sur l'écran du téléphone mobile.

Ensuite, le serveur applicatif 20 invite l'utilisateur à initier une session WAP ou une communication vocale, qui s'avère possible également, via le mécanisme de Push WAP.

Le serveur applicatif 20 envoie pour cela une requête de Push WAP à l'utilisateur mobile (figure 4).

Dans le premier cas, où le service d'actualités se fait de manière visuelle via les services WAP, l'utilisateur 10 reçoit une requête 31 de Push WAP (Push WAP de type Service Indication) et l'utilisateur accède à l'URL du site WAP (serveur 70) pointée par la requête de Push WAP. L'écran du téléphone mobile est alors celui typiquement affiché par les sites WAP connus.

Dans le second cas, c'est à dire le cas d'accès aux actualités en vocal, l'utilisateur 10 reçoit la requête 32 de Push WAP adaptée et le terminal mobile initie l'appel vers le serveur vocal 80 (Push WAP de type Service loading). L'URL est alors de type WTA (Wireless Telephony Application) pointant vers le serveur vocal.

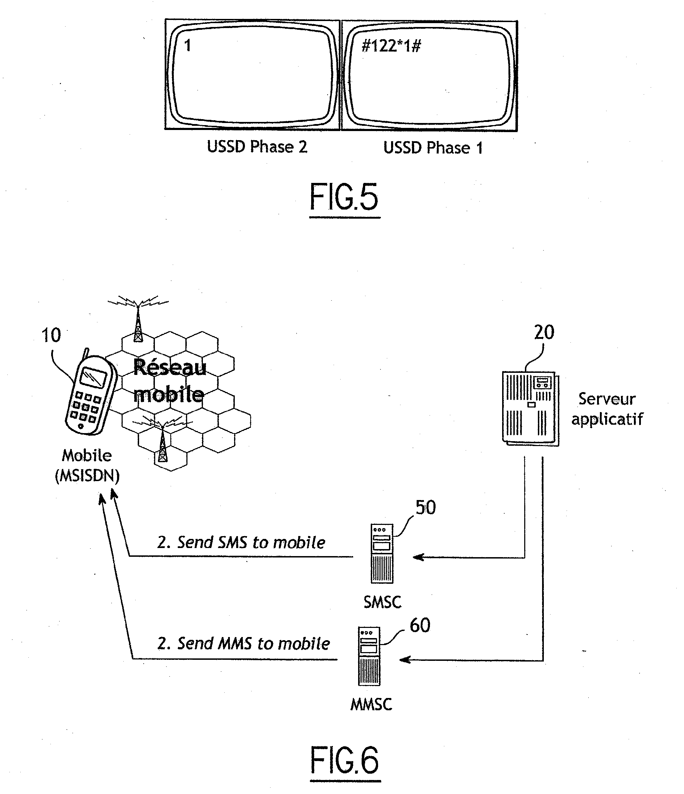

Dans l'exemple de service décrit maintenant en référence aux figures 5 et 6, on considère que l'utilisateur 10 a un terminal compatible USSD. Dans le cas MMS, le terminal doit être de plus compatible MMS.

D'abord, l'utilisateur 10 initie une connexion USSD. L'utilisateur initie à partir de son terminal mobile une connexion USSD et consulte le menu associé (en USSD Phase 1 ou Phase 2 selon la compatibilité réseau et/ou terminal).

L'utilisateur 10 choisit la rubrique «Météo» (figure 5). Dans notre exemple de service, cette rubrique se réfère à un service en SMS ou MMS. Autrement dit, l'utilisateur reçoit un SMS ou MMS.

La réponse envoyée par le mobile est représentée à la figure 5 (Phase 2 ou Phase 1).

Le serveur applicatif 20, en charge de la logique de service, clôt d'abord la connexion USSD.

Ensuite le serveur applicatif 20 offre à l'utilisateur l'accès au service en SMS ou en MMS. Le serveur applicatif 20 envoie un SMS ou un MMS à l'utilisateur mobile 10 via le SMSC 50 ou le MMSC 60 respectivement.

Dans le cas d'un accès à l'information en MMS, l'utilisateur reçoit un MMS qui présente la carte de météo illustrée.

Un service utilisant ces dispositions peut être offert par tout opérateur de téléphonie mobile (GSM, GPRS, UMTS) supportant les technologies USSD, WAP et MMS et par tout constructeur de plates-formes de services mobiles.

Ainsi on obtient un système et un procédé d'accès à une communication vocale ou une communication de données de type WAP, ou MMS à partir d'une connexion USSD (indépendamment connexion USSD Phase 1 ou Phase 2).

Dans le domaine des communications de données, un utilisateur se verra ici offrir la possibilité de migrer d'une connexion USSD vers une communication de données de type WAP, MMS ou SMS de façon transparente (continuité et garantie de service préservées). La migration vers le WAP lui permettra par exemple d'avoir accès à une information plus enrichie (images, couleur....) que celle proposée en USSD.

Dans le domaine des communications vocales, un utilisateur se verra offrir la possibilité de migrer d'une connexion USSD vers une communication vocale de manière automatique. L'accès au serveur vocal lui permettra, par exemple, d'écouter l'information souhaitée.

Il n'y a aujourd'hui aucun système qui permette de faire migrer dans le cadre d'une logique de service et de manière transparente, un utilisateur connecté en USSD vers une technologie WAP, MMS ou vocale.

L'USSD est une technologie nécessitant peu de ressources réseaux et présentant une information simple et concise à l'utilisateur.

Grâce à l'invention, un service utilisant l'USSD pourra proposer un rebond:
- vers le WAP permettant ainsi à l'utilisateur d'avoir accès à une information plus riche (moyennant une utilisation de ressources réseaux plus importante).
- vers la technologie MMS. L'utilisateur recevra alors un message multimédia sur son terminal.
- vers un serveur vocal. L'utilisateur aura alors accès à une information vocale.

Les principaux avantages pour l'opérateur mobile sont les suivants:
- utilisation de l'USSD comme initiateur de communications enrichies WAP, MMS ou vocales ;
- utilisation de l'USSD comme un portail d'accès à des services innovants mettant en oeuvre des technologies MMS, WAP ou des communications vocales ;
- accès par l'utilisateur à des services utilisant la technologie la mieux adaptée aux types de contenus présentés.

Les principaux avantages pour l'usager mobile sont les suivants:
- perception d'un seul et même service (continuité de service lors de la migration) ;
- accès à un bouquet de services et navigation par menus via la technologie USSD (accès à l'USSD simple et rapide).
- accès à du contenu enrichi (notamment MMS, WAP, serveur vocal) à partir d'une connexion USSD.

Ainsi, l'USSD s'avère constituer un moyen approprié pour accéder à une communication paradoxalement à fort contenu, telle qu'une communication vocale ou WAP ou un envoi de messages MMS vers le téléphone mobile.

L'USSD, technique de communication de faible coût pour l'opérateur et pour l'utilisateur, s'avère être une porte d'entrée qui est appropriée pour donner accès à un contenu volumineux, alors que paradoxalement la connexion USSD est en elle-même particulièrement restreinte en capacité de transport.

Le caractère avantageux de la technologie rudimentaire USSD est d'autant plus surprenant pour l'initiation des communications de type vocal ou WAP, du fait que celles-ci ont un caractère particulièrement enrichi.

Bien entendu, les exemples décrits ci-dessus visent un choix par la connexion USSD entre diverses informations relevant de communications de types différents (notamment WAP, vocale, MMS).

Toutefois une connexion USSD pour activer ou non un seul type de communication prévu parmi ceux précités (WAP, vocale, MMS) est également dans le cadre de l'invention.
- [1]: 3G TS 22.090 Unstructured Supplementary Service Data Stage 1 Technical Specification Group Services and System Aspects
- [2]: 3G TS 23.090 Unstructured Supplementary Service Data Stage 2 Technical Specification Group Core Network
- [3]: 3G TS 24.090 Unstructured Supplementary Service Data Stage 3 Technical Specification Group Core Network
- [4]: WAP Push Architectural Overview WAP-250 PushArchOverview-20010703
- [5]: WAP Service Indication Spécification WAP-167-Servicelnd-20010731
- [6]: WAP Service Loading Specification WAP-168 ServiceLoad-20010731

## Revendications

1. Procédé de mise en oeuvre d'une communication ayant un type appartenant au groupe constitué des communications de type vocale, WAP ou MMS sur un téléphone mobile (10), dans lequel procédé une étape préliminaire consiste à offrir à l'utilisateur (10) la possibilité d'activer ou non une telle communication, **caractérisé en ce que** ce choix d'activer ou non une telle communication est offert à l'utilisateur par une connexion USSD (10, 20).

2. Procédé selon la revendication 1, **caractérisé en ce que** ladite communication est une communication ayant un type appartenant au groupe des communications de type WAP et vocale.

3. Procédé selon la revendication 1, **caractérisé en ce que** l'étape préliminaire consiste à offrir à l'utilisateur (10) le choix d'activer ou non une communication de données, communication de données ayant la forme d'un envoi de message MMS à destination du téléphone mobile (10).

4. Procédé selon la revendication 1, **caractérisé en ce qu'**il comprend l'étape consistant à établir un canal de communication vocale ou WAP (70, 80) en utilisant une commande de type forçage de commande WAP (push WAP) (31, 32), apte à susciter un appel à un serveur vocal ou WAP de la part du téléphone mobile.

5. Procédé selon la revendication 1, **caractérisé en ce qu'**il comprend le fait d'établir un canal de communication vocale (80) en utilisant une commande de type push WAP (30, 32).

6. Procédé selon la revendication 1, **caractérisé en ce qu'**il comprend le fait d'établir un canal de communication de données avec un serveur WAP (30, 31 ) en utilisant une commande de type push WAP.

7. Procédé selon l'une quelconque des revendications 1 à 6, **caractérisé en ce qu'**il comprend le fait d'offrir par la connexion USSD un choix entre des informations de types différents parmi des informations de type vocales, WAP ou MMS, par l'intermédiaire d'un menu à rubriques sur le téléphone mobile.

8. Réseau de téléphonie mobile comprenant un serveur applicatif (20) et une plateforme de communication (30, 40, 60, 70, 80) mettant en oeuvre une communication d'un type appartenant au groupe composé des communications de type vocale (80), WAP (70) ou MMS, le serveur applicatif (20) comprenant des moyens pour mettre en oeuvre une connexion USSD (10, 20) avec un téléphone mobile (10), **caractérisé en ce que** le serveur applicatif est prévu pour prendre en compte une instruction du téléphone mobile (10) reçue par cette connexion USSD (10, 20), et, en réponse à cette instruction, initier une communication entre la plateforme (30, 40, 60, 70, 80) de communication et le téléphone mobile (10).

9. Réseau selon la revendication 8, **caractérisé en ce que** la plateforme de communication (40, 70, 80) est un serveur de communication mettant en oeuvre une communication d'un type appartenant au groupe des communications WAP et vocale.

10. Réseau de communication selon la revendication 8, **caractérisé en ce que** la plateforme de communication est un MMS Center (60) (Centre MMS).

11. Réseau selon la revendication 9, **caractérisé en ce que** le serveur applicatif (20) est prévu pour transmettre au téléphone mobile (10) une commande de type push WAP (30, 32) suscitant de la part du téléphone mobile un appel à un serveur vocal ou à un serveur WAP.

12. Réseau selon l'une quelconque des revendications 8 à 11, **caractérisé en ce que** le réseau inclut également un module formant Push Proxy Gateway (30) commandé par le serveur applicatif (20) et prenant en charge l'envoi d'un message de push WAP (31, 32).

13. Serveur applicatif (20) de réseau de téléphonie mobile, comprenant des moyens pour mettre en oeuvre une connexion USSD avec un téléphone mobile (10), le serveur étant **caractérisé en ce qu'**il inclut des moyens pour prendre en compte une instruction de téléphone mobile (10) reçue par cette connexion USSD, et, en réponse à cette instruction, initier une communication du téléphone mobile, cette communication appartenant au groupe des communications de type WAP, vocal ou MMS.

14. Serveur applicatif (20) selon la revendication 13, **caractérisé en ce qu'**il est prévu pour initier une communication appartenant au groupe composé des communications de type WAP ou vocale.

15. Serveur applicatif selon la revendication 13, **caractérisé en ce qu'**il est prévu pour initier l'envoi d'un message MMS à destination du téléphone mobile (10).
